# EUROPÄISCHE PATENTSCHRIFT

(11) **EP 2 107 766 B1**
(45) Veröffentlichungstag und Bekanntmachung des Hinweises auf die Patenterteilung: **24.02.2016**
(21) Anmeldenummer: 08153905.8
(22) Anmeldetag: 01.04.2008
(51) Int. Cl.: H04M 1/02

(54) **ELEKTRISCHES GERÄT, INSBESONDERE STATIONSGERÄT FÜR EINE HAUSKOMMUNIKATIONSANLAGE"**
ELECTRICAL DEVICE, IN PARTICULAR VOICE COMMUNICATION FOR A DOMESTIC INTERCOM FACILITY
APPAREIL ÉLECTRIQUE, EN PARTICULIER APPAREIL DE STATION POUR UNE INSTALLATION DE COMMUNICATION À DOMICILE

(43) Veröffentlichungstag der Anmeldung: 07.10.2009
(73) Patentinhaber: GIRA Giersiepen GmbH & Co. KG, 42477 Radevormwald (DE)
(72) Erfinder: Andre Dornseiff, 51688 Wipperfürth (DE); Hartmut Heinbach, 57080 Siegen (DE)
(74) Vertreter: Patentanwälte Dr. Solf & Zapf

(56) Entgegenhaltungen:
- DE-U1- 20 217 877
- DE-U1- 20 221 518
- US-A1- 2007 046 837

## Beschreibung

Die vorliegende Erfindung betrifft ein Stationsgerät, wie eine Tür- oder Wohnungsstation, für eine Hauskommunikationsanlage gemäß dem Oberbegriff des Patentanspruchs 1.

Elektrische Geräte sind beispielsweise in Ausführungen als Stationsgeräte, wie Tür oder Wohnungsstationen, für Hauskommunikationsanlagen bekannt. Beispielsweise beschreibt die EP 1 843 590 A1 eine Hauskommunikationsanlage mit mindestens einem solchen Stationsgerät, wobei es sich speziell um eine Video-Wohnungsstation handelt. Eine mit der Wohnungsstation über einen Zweidraht-Bus verbundene oder nach einem Rufsignal verbindbare, im Außenbereich einer Haus-Eingangstür angeordnete Türstation weist eine Videokamera auf, wobei ein Display der Wohnungsstation zur Darstellung eines Videobildes der Videokamera der Türstation anhand eines über den Bus zu übertragenden Videosignals vorgesehen ist.

Solche Geräte sind in der Regel zur Montage auf einer Wandfläche vorgesehen, d. h. für eine Aufputz-Montage (AP-Installation). Dazu wird das Basisteil über geeignete Mittel auf der Wand befestigt, wobei äußere Anschlussleitungen (z. B. eines Kabels) durch eine Öffnung in den Bereich des Anschlussteils geführt und an dessen Anschlussklemmen angeschlossen werden. Die internen Verbindungen der Anschlussklemmen mit den elektrischen bzw. elektronischen Geräte-Funktionsteilen erfolgt üblicherweise über Verbindungsleitungen, die über elektrische Steckverbinder mit Schaltungskomponenten verbunden werden können.

Ein elektrisches Gerät der eingangs beschriebenen, dem Oberbegriff des Anspruchs 1 entsprechenden Art ist in dem Dokument US 2007/0046837 A1 beschrieben. Dabei handelt es sich speziell um einen Flachbildschirm eines Video-Kommunikationssystems. Hierbei wird ein Anschluss-Basisteil in einer Aufnahmedose montiert, wobei diese Aufnahmedose in einer Wandfläche (Unterputz) installiert ist. Das Basisteil weist federnde Kontakte auf, die bei der Montage eines Geräte-Vorderteils selbsttätig Gegenkontaktflächen des Vorderteils kontaktieren.

Das Dokument DE 202 21 518 U1 beschreibt eine Hauskommunikationsanlage mit modular aufgebauten Stationsgeräten. Jede modulare Station besteht aus mindestens einem Hauptmodul und mindestens einem Funktionsmodul, wobei das Hauptmodul als Geräteeinsatz ausgebildet ist, der in eine Elektro-Installationsdose eingesetzt und unmittelbar mit Anschlussdrähten zu verbinden ist.

Ein entsprechender Aufbau ist auch in dem Dokument DE 202 17 877 U1 offenbart. Zusätzlich ist hier eine bestimmte Ausgestaltung einer die einzelnen Module verbindenden Internbus-Verbindung beschrieben.

Der vorliegenden Erfindung liegt die Aufgabe zu Grunde, ein elektrisches Gerät der zuvor beschriebenen, gattungsgemäßen Art zu schaffen, bei dem einerseits die Herstellung, die Geräte-Montage und die Installation insbesondere hinsichtlich der elektrischen Anschlussverbindungen besonders einfach, schnell und wirtschaftlich durchführbar sind, wobei andererseits eine verbesserte oder zusätzliche Funktionalität erreicht werden soll.

Erfindungsgemäß wird dies durch die Merkmale des unabhängigen Anspruchs 1 erreicht. Vorteilhafte Ausgestaltungsmerkmale der Erfindung sind Gegenstand der abhängigen Ansprüche.

Demnach ist das Anschlussteil derart über federnde Anlagekontaktelemente elektrisch mit den Funktionsteilen verbunden oder verbindbar, dass die Verbindungen zwischen den Anschlussklemmen und den Funktionsteilen selbsttätig durch Anlagekontakt beim mechanischen Verbinden von Vorderteil und Basisteil des Gerätegehäuses hergestellt werden. Zweckmäßig weisen die Funktionsteile (mindestens) eine elektrische, in dem Gehäuse-Vorderteil gehalterte Leiterplatte auf, wobei die Anlagekontaktelemente als Federstifte ausgebildet sind, die im Wesentlichen senkrecht zur Ebene der Leiterplatte ausgerichtet sind. Vorzugsweise sind dabei die Anlagekontaktelemente Bestandteile des Anschlussteils, während die Leiterplatte Kontaktflächen zum direkten elektrischen Anlagekontakt der Anlagekontaktelemente aufweist. Grundsätzlich ist dies aber auch umgekehrt möglich, d. h. die Anlagekontaktelemente können an der Leiterplatte gehaltert sein, während das Anschlussteil zugeordnete Kontaktflächen aufweist. Diese Ausgestaltung vereinfacht die Montage des Gerätes, weil nach dem Anschluss der äußeren Anschlussleitungen an den Anschlussklemmen des Anschlussteils nur das Gehäuse-Vorderteil an dem Basisteil befestigt zu werden braucht, was durch einfaches Aufrasten erfolgen kann. Dadurch sind bereits automatisch alle internen elektrischen Verbindungen hergestellt. Vorzugsweise sind die Anschlussklemmen als Schraubklemmen ausgebildet. Es ist aber auch möglich, dass die Anschlussklemmen des Anschlussteils als so genannte Steckklemmen ausgeführt sind, wobei die Anschlussleitungen mit abisolierten Enden lediglich in die Klemmen eingesteckt zu werden brauchen.

Erfindungsgemäß ist hierbei vorgesehen, dass das Anschlussteil zwei Anschlüsse für eine Zweidraht-Busleitung, zwei weitere Anschlüsse für einen externen Etagen-Ruftaster sowie zwei zusätzliche Anschlüsse für eine Zusatz-Spannungsversorgung aufweist, wobei das Gerät Mittel zur selbsttätigen Erkennung der Zusatz-Spannungsversorgung sowie zur Freigabe von Zusatzfunktionen bei erkanntem Vorhandensein der Zusatz-Spannungsversorgung aufweist. Über die zusätzlichen Anschlüsse kann somit eine Zusatz-Spannungsversorgung angeschlossen werden. Dadurch steht - unabhängig von der eigentlichen Spannungsversorgung über die angeschlossene Zweidraht-Busleitung - stets genügend Leistung zur Verfügung, so dass automatisch bestimmte Zusatzfunktionen des Gerätes freigegeben werden können. Durch diese erfindungsgemäße Ausgestaltung wird somit eine verbesserte oder zusätzliche Funktionalität des Gerätes geschaffen.

In der Zeichnung ist als bevorzugtes Ausführungsbeispiel der Erfindung ein elektrisches Gerät in einer Ausgestaltung als Stationsgerät für eine Hauskommunikationsanlage veranschaulicht. Es zeigen:
- Fig.1: eine Perspektivansicht eines erfindungsgemäßen Gerätes in einer bevorzugten Ausführung als Video-Wohnungsstation zur Aufputz-Montage (AP-Installation),
- Fig. 2: eine perspektivische Explosionsdarstellung der wesentlichen Bestandteile des Gerätes gemäß Fig. 1,
- Fig. 3: eine zweite Explosionsdarstellung ähnlich Fig. 2, aber mit teilmontierten Komponenten und aus anderer Blickrichtung,
- Fig. 4: eine weitere Perspektivansicht in einem weitergehend teilmontierten Zustand bestimmter Bestandteile und
- Fig. 5: eine perspektivische Detail-Explosionsdarstellung im Bereich eines Mikrofons.

In den verschiedenen Figuren der Zeichnung sind gleiche Teile stets mit den gleichen Bezugszeichen versehen.

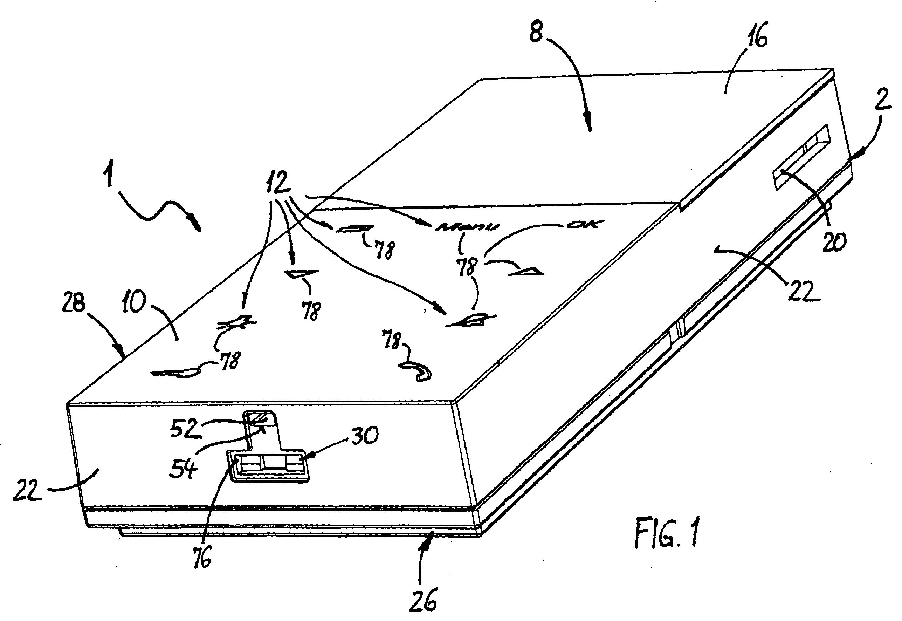

Ein erfindungsgemäßes Gerät ist in der bevorzugten Ausführung als Stationsgerät 1 (s. den Zusammenbau in Fig. 1) Bestandteil einer Hauskommunikationsanlage. Solche Anlagen werden in Gebäuden aus mindestens einer Türstation (im Außenbereich neben einer Haustür) und einer beliebigen Anzahl von Wohnungsstationen installiert, indem alle Stationen bevorzugt über einen gemeinsamen Zweidraht-Bus miteinander verbunden werden. Der Bus ist zur Übertragung von digitalen Steuersignalen und Kommunikationssignalen, und zwar Audio- und Videosignalen, ausgelegt und überträgt bevorzugt zusätzlich auch die Versorgungsspannung von einem zentralen Netzteil an die einzelnen Stationen.

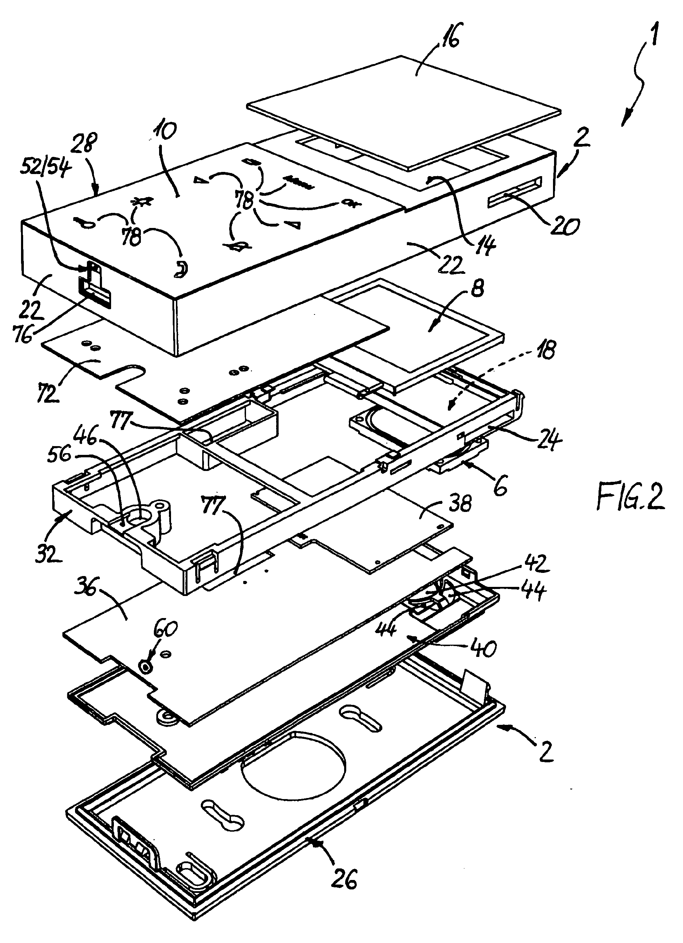

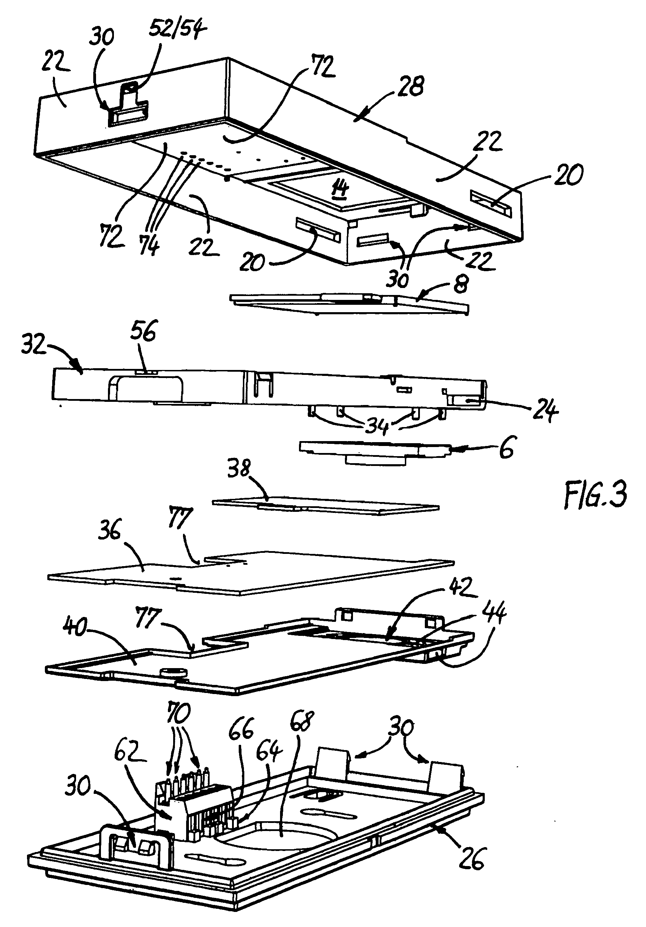

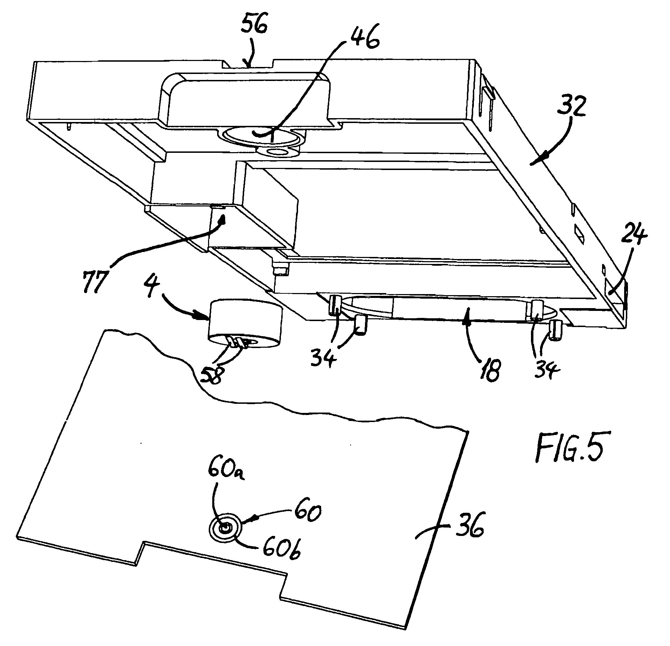

Das Stationsgerät 1 ist insbesondere als Wohnungsstation konzipiert, die im Innenbereich einer Wohnung anzuordnen ist. Das Stationsgerät 1 weist ein Gerätegehäuse 2 sowie Audio-Komponenten mit einem Mikrofon 4 (s. Fig. 5) und einem Lautsprecher 6 (Fig. 2 und 3) auf. Bevorzugt weist das Stationsgerät 1 außerdem Video-Komponenten mit einem Display 8 zur Darstellung eines Videobildes und/oder eines Benutzermenüs auf. Ferner sind im Bereich einer Vorderwandung 10 des Gerätegehäuses 2 Bedien- und Anzeigeelemente 12 vorgesehen.

Die Audio-Komponenten mit dem Mikrofon 4 und dem Lautsprecher 6 sind zur Audio-Kommunikation zwischen den Stationen vorgesehen, insbesondere zwischen der Türstation und jeweils mindestens einer Wohnungsstation. Vorzugsweise sind auch Internverbindungen zwischen jeweils mindestens zwei Wohnungsstationen möglich. Zum Aufbau einer Audio-Verbindung wird zunächst an einer Station, insbesondere der Türstation, über eine Ruftaste ein Rufsignal für eine bestimmte andere Station erzeugt. Die Anlage ist zuvor bei Inbetriebnahme hinsichtlich der Zuordnung zwischen Ruftasten und Stationen programmiert worden, so dass in den Stationen alle über den Bus übertragenen Rufsignale überwacht werden. Die auf die jeweilige Ruftaste programmierte Station erkennt anhand einer Adressen-Kodierung das ihr zugeordnete Signal und erzeugt ein akustisches und/oder optisches Rufsignal. Der Benutzer kann dann durch Betätigen einer Annahmetaste den Ruf annehmen, wodurch eine Audio-Verbindung mit der rufenden Station aufgebaut wird. Das Video-Display 8 des Stationsgerätes 1 dient zur Darstellung eines Videobildes, welches von einer Videokamera der Türstation erzeugt und in Form eines vorzugsweise außerhalb des hörbaren Frequenzbereiches modulierten Videosignals über den Bus übertragen wird.

Wie sich weiterhin aus Fig. 2 und 3 ergibt, ist das Display 8 bevorzugt von einem flachen TFT- oder LCD-Monitor gebildet. Dabei wird das Display 8 unmittelbar unterhalb der Vorderwandung 10 des Gerätegehäuses 2 im Bereich einer Gehäuseöffnung 14 untergebracht. Die Gehäuseöffnung 14 mit dem Display 8 wird dann bevorzugt von einer äußeren transparenten Abdeckung 16 überdeckt.

Weiterhin ist bevorzugt vorgesehen, dass der Lautsprecher 6 innerhalb des Gehäuses 2 in einem zur vorderen Geräte-Sichtseite hin von dem Display 8 überdeckten Bereich, d. h. "unterhalb" des Displays 8, angeordnet ist. Hierbei ist dem Lautsprecher 6 eine Schallkammer 18 (s. hierzu insbesondere Fig. 2 und 5) mit mindestens einer seitlichen Gehäuse-Schallöffnung 20 zugeordnet. In bevorzugter Ausgestaltung weist das Gehäuse 2 im Bereich von zwei gegenüberliegenden Seitenwandungen 22 jeweils eine von zwei Schallöffnungen 20 auf, wobei jede Schallöffnung 20 mit der Schallkammer 18 über einen Schallkanal 24 verbunden ist. Die Schallkammer 18 und/oder der bzw. jeder Schallkanal 24 kann vorzugsweise nicht dargestellte Formelemente zur Beeinflussung / Führung des Schalls enthalten.

In einer besonderen Ausgestaltung ist dem Lautsprecher 6 auf seiner von der Schallkammer 18 abgewandten Seite ein akustisches Rückvolumen zugeordnet, wobei dieses Rückvolumen zur Vermeidung eines akustischen Kurzschlusses von der Schallkammer 18 akustisch getrennt ist. Dies wird im Folgenden noch genauer erläutert werden.

In der dargestellten, bevorzugten Ausführungsform ist das Gerätegehäuse 2 zur Montage auf einer Wandfläche konzipiert (so genannte AP-Montage bzw. Aufputz-Montage). Dazu besteht das Gerätegehäuse 2 aus einem Montage-Basisteil 26 und einem Gehäuse-Vorderteil 28. Das Vorderteil 28 ist flach haubenartig ausgebildet und besteht aus der rechteckigen Vorderwandung 10 und vier dazu senkrechten Seitenwandungen 22. Das Basisteil 26 ist als Grundplatte über geeignete Befestigungsmittel an einer Wandfläche befestigbar. Das Vorderteil 28 ist dann über Rastmittel 30 an dem plattenartigen Basisteil 26 befestigbar (aufrastbar). Wie dargestellt kann beispielsweise das Basisteil 26 als Rastmittel federnde Rastelemente aufweisen, die in zugehörige Rastöffnungen des Vorderteils 28 eingreifen.

Wie sich aus den Explosionsdarstellungen in Fig. 2 bis 5 ergibt, nimmt das Vorderteil 28 ein rahmenartiges Trägerteil 32 auf. Dieses Trägerteil 32 trägt wesentliche Funktionsteile des Stationsgerätes 1 und insbesondere auch den Lautsprecher 6. Das Trägerteil 32 weist zudem auch die Schallkammer 18 mit seitlichen Schallkanälen 24 auf, wobei die Schallkanäle 24 in jeweils eine der Schallöffnungen 20 des Vorderteils 28 des Gehäuses 2 übergehen, wenn das Trägerteil 32 in das Vorderteil 28 eingesetzt ist. Die Schallkammer 18 ist am besten in Fig. 5 zu erkennen. In diesem Bereich weist das Trägerteil 32 Haltelemente 34 für den Lautsprecher 6 auf. Der Lautsprecher 6 wird auf dieser Seite so an dem Trägerteil 32 befestigt, dass er mit seiner Membran direkt in die Schallkammer 18 gerichtet ist. Über die Schallkanäle 24 und die Schallöffnungen 20 gelangt der Schall aus dem Stationsgerät 1 nach außen.

Das Trägerteil 32 trägt weiterhin eine Haupt-Leiterplatte 36 (Mainboard mit nicht im Einzelnen dargestellten elektronischen Bestandteilen) sowie vorzugsweise eine separate Grafikkarte 38 für das Display 8, wobei das Display 8 selbst ebenfalls von dem Trägerteil 32 gehalten wird. Im montierten Zustand liegt die Grafikkarte 38 direkt unterhalb des Displays 8 und kann direkt über Anlagekontakte kontaktiert sein. Die Grafikkarte 38 enthält eine nicht genauer dargestellte elektronische Ansteuereinrichtung für das Display 8.

Zwischen dem Basisteil 26 und dem Trägerteil 32 ist ein plattenartiges Abdeckteil 40 als "Platinenabdeckung" angeordnet. Dieses Abdeckteil 40 ist vorzugsweise im Bereich des Lautsprechers 6 zur Bildung des akustischen Rückvolumens ausgestaltet. Dazu weist das Abdeckteil 40 einen Aufnahmeraum 42 für den rückwärtigen Bereich des Lautsprechers 6 auf. Hierzu wird insbesondere auf Fig. 2 bis 4 verwiesen. Dieser Aufnahmeraum 42 ist von der Schallkammer 18 akustisch entkoppelt. Bei der dargestellten Ausführungsform weist das Abdeckteil 40 im Bereich des Lautsprecher-Aufnahmeraums 42 mindestens eine akustisch wirksame Öffnung 44 auf, so dass das akustische Rückvolumen hauptsächlich im Bereich zwischen dem Abdeckteil 40 und dem Basisteil 26 gebildet ist.

In einer bevorzugten, aber nicht dargestellten Alternative ist es ebenfalls möglich, das Abdeckteil 40 im Bereich des Aufnahmeraums 42 öffnungsfrei derart auszubilden, dass dann das akustische Rückvolumen hauptsächlich im Bereich zwischen dem Abdeckteil 40, dem Trägerteil 32 und dem Vorderteil 28, d. h. folglich in dem die Leiterplatten aufnehmenden Bereich gebildet ist. Der besondere Vorteil dieser Ausführung liegt darin, dass die Dichtigkeit des Rückvolumens unabhängig von der Beschaffenheit des Basisteils 26 (Grundplatte) und dessen Halterung auf einer Wand ist.

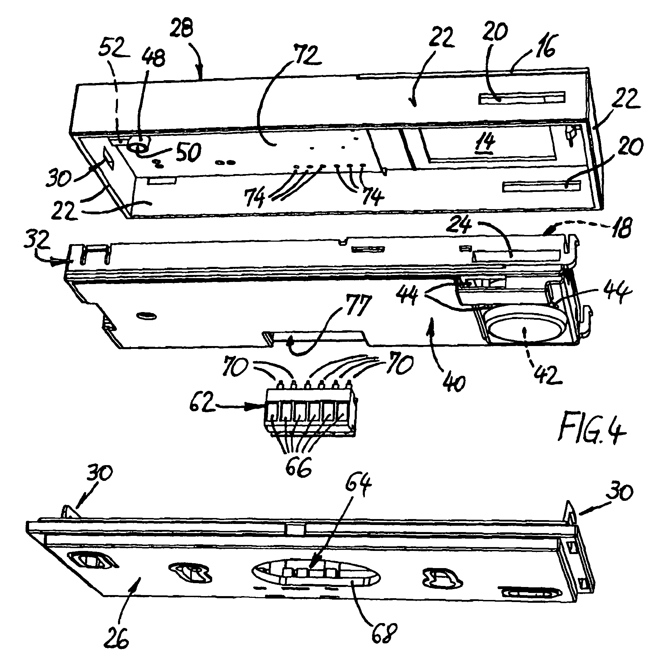

In weiterer vorteilhafter Ausgestaltung ist vorgesehen, dass das Mikrofon 4 innerhalb des Gerätegehäuses 2 derart in einer Aufnahme 46 angeordnet ist, dass es akustisch vom Schall des Lautsprechers 6, und zwar insbesondere von dessen rückwärtigem Schall im Bereich des Rückvolumens, weitgehend entkoppelt ist. Das nur in Fig. 5 dargestellte Mikrofon 4 ist als kleine zylindrische Kapsel ausgebildet. Die Aufnahme 46 ist insbesondere von einer zur Aufnahme und Halterung des Mikrofons 4 ausgelegten Öffnung des Trägerteils 32 gebildet. Gemäß Fig. 4 weist das Gehäuse-Vorderteil 28 auf der Innenseite der Vorderwandung 10 einen Ringkragen 48 auf. Im montierten, in das Vorderteil 28 eingesetzten und vorzugsweise verrasteten Zustand des Trägerteils 32 greift der Ringkragen 28 umfangsgemäß dichtend in die das Mikrofon 4 haltende Öffnung 46 des Trägerteils 32 ein. Somit vergrößert praktisch der Ringkragen 48 die Aufnahme 46 zur Bildung einer Schallkammer 50. Diese Schallkammer 50 geht in einen Schallkanal 52 über, der über eine Gehäuse-Schallöffnung 54 nach außen mündet. Dabei ist der Schallkanal 52 vorzugsweise durch eine einstückig angeformte Wandung innerhalb des Vorderteils 28 gebildet. Die Schallöffnung 54 ist insbesondere in der Seitenwandung 22 gebildet, die bei bestimmungsgemäßer Montage vertikal nach unten weist. Wie sich noch aus Fig. 2 und 5 ergibt, weist das Trägerteil 32 ausgehend von der Aufnahme 46 eine nutartige Ausnehmung 56 für den Schallkanal 52 des Gehäuse-Vorderteils 28 auf.

Das Mikrofon 4 ist über elektrische Anschlüsse 58 an einer Leiterplatte, insbesondere an der Haupt-Leiterplatte 36 angeschlossen, wobei die Anschlüsse 58 vorzugsweise von federnden Anlagekontaktelementen gebildet sind, die elektrisch leitend auf Kontaktflächen 60 der Leiterplatte 36 zur Auflage kommen. Die Kontaktierung des Mikrofons 4 erfolgt somit allein durch Zusammenfügen der Bestandteile, indem die Leiterplatte 36 mit dem das Mikrofon 4 aufnehmenden Trägerteil 32 verbunden wird. Hierbei ist es weiterhin vorteilhaft, wenn die Kontaktflächen 60 zueinander konzentrisch ausgebildet sind. Dies bedeutet, dass eine innere Kontaktfläche 60a etwa kreisförmig und eine äußere Kontaktfläche 60b dazu konzentrisch kreisringförmig ausgebildet sind. Hierzu wird insbesondere auf Fig. 5 verwiesen. Die Anlagekontakt-Anschlüsse 58 des Mikrofons 4 sind hierbei derart ausgebildet und angeordnet, dass der eine Anschluss die innere Kontaktfläche 60a und der andere Anschluss die äußere Kontaktfläche 60b kontaktiert, und zwar vorteilhafterweise unabhängig von der Drehausrichtung des Mikrofons 4 innerhalb der Aufnahme 36. Dies führt zu einer sehr einfachen Montage, zumal sich auch Anschlussleitungen für das Mikrofon erübrigen.

Es ist weiterhin vorteilhaft, wenn das Mikrofon 4 eine äußere Kapselung aus einem gummielastischen Material aufweist. Hierdurch ist einerseits eine gute Halterung innerhalb der Aufnahme 46 gewährleistet und andererseits auch eine gute akustische Abdichtung, indem der Ringkragen 48 des Gehäuse-Vorderteils 28 dicht zur Anlage auf der gummielastischen Kapselung des Mikrofons 4 gelangt.

Wie sich nun insbesondere aus Fig. 3 und 4 ergibt, ist an bzw. auf dem Basisteil 26 ein elektrisches Anschlussteil 62 gehaltert, und zwar vorzugsweise über Rastmittel 64. Das Anschlussteil 62 weist einerseits elektrische Anschlussklemmen 66 für nicht dargestellte, äußere elektrische Anschlussleitungen auf. Es kann sich bevorzugt um Schraubklemmen, aber auch um Steckklemmen handeln. Auf Grund der AP-Montage weist das Basisteil 28 mindestens eine Durchführöffnung 68 für aus einer Gebäudewand geführte Leitungen (Kabel) auf. Das Anschlussteil 62 weist mindestens zwei Anschlussklemmen 66 für den Zweidraht-Bus auf. Vorzugsweise sind zwei weitere Anschlussklemmen 66 für einen nicht dargestellten, außerhalb einer Wohnung insbesondere vor einer Wohnungs-Eingangstür angeordneten Etagen-Ruftaster vorgesehen. Schließlich können zwei weitere Anschlussklemmen 66 für eine Zusatz-Spannungsversorgung vorhanden sein. Somit sind in bevorzugter Ausgestaltung sechs Anschlussklemmen 66 vorhanden. Die Anschlussklemmen 66 des Anschlussteils 62 sind erfindungsgemäß über federnde Anlagekontaktelemente 70 "leitungsfrei" (ohne interne Verbindungsleitungen, wie Drähte oder Litzen) mit einer in dem Vorderteil 28 des Gerätegehäuses 2 angeordneten Leiterplatte 72 elektrisch verbunden. Bei dieser Leiterplatte 72 handelt es sich bevorzugt um ein so genanntes "Keyboard"; diese Leiterplatte 72 trägt auch Schaltelemente, und zwar insbesondere kapazitive Schaltelemente sowie Leuchtelemente im Bereich der Bedien- und Anzeigelemente 12. Die Leiterplatte 72 ist bevorzugt in das Gehäuse-Vorderteil 28 eingeklebt. Alternativ zu einem Verkleben kann die Leiterplatte 72 auch mechanisch an das Vorderteil 28 gedrückt werden. Die Anlagekontaktelemente 70 sind als teleskopartig längenvariable Federstifte ausgebildet, die im Wesentlichen senkrecht zu der Leiterplatte 72 ausgerichtet sind. Wie dargestellt sind bevorzugt die Anlagekontaktelemente 70 Bestandteile des Anschlussteils 62, während die Leiterplatte 72 zugehörige Kontaktflächen 74 zum direkten elektrischen Anlagekontakt der Anlagekontaktelemente 70 aufweist. Grundsätzlich kann dies aber auch umgekehrt sein. Durch diese vorteilhafte Ausgestaltung werden über das Anschlussteil 62 die daran angeschlossenen äußeren Anschlussleitungen mit der Elektronik des Stationsgerätes 1 auf sehr einfache Weise dadurch verbunden, dass die Bestandteile nur zusammengefügt werden müssen, wobei die Verbindungen über die durch Federkraft auf den Kontaktflächen 74 aufliegenden Kontaktelemente 70 hergestellt werden. Es handelt sich somit vorteilhafterweise um leitungsfreie Verbindungen, d. h. es können interne Verbindungsleitungen und zugehörige elektrische (Steck- oder Löt-) Verbindungen vorteilhafterweise entfallen. Die bevorzugte Verbindungsart ist auch noch aus einem zusätzlichen Grund vorteilhaft. Bei den verwendeten Rastmitteln 30 zwischen Basisteil 26 und Vorderteil 28 erfolgt ein Lösen des Vorderteils 28, indem die auf einer (unteren) Seite vorgesehenen Rastmittel 30 durch eine Gehäuseöffnung 76 hindurch gelöst bzw. entriegelt werden können. Dadurch kann das Vorderteil 28 dann mit dieser (unteren) Seite nach vorne verschwenkt werden, bis das Vorderteil 28 auch in seinem gegenüberliegenden (oberen) Bereich von den Rastmitteln 30 freikommt. Die erfindungsgemäßen Anlagekontaktelemente 70 lassen diese relative Schwenkbewegung ohne Probleme zu.

Ergänzend sei bemerkt, dass auf Grund der beschriebenen, bevorzugten Ausgestaltung der inneren Geräte-Funktionsteile das Trägerteil 32, die Haupt-Leiterplatte 36 und das Abdeckteil 40 jeweils Ausnehmungen 77 für das Anschlussteil 62 aufweisen (s. Fig. 2 bis 4), damit das Anschlussteil 62 über seine Anlagekontaktelemente 70 direkt die Kontaktflächen 74 der direkt unterhalb der Gehäuse-Vorderwandung 10 angeordneten Leiterplatte 72 kontaktieren kann. Durch die Ausnehmungen 77 wird somit ein Aufnahmeraum für das Anschlussteil 62 geschaffen, was zu einer sehr kompakten Bauform des Gerätes 1 führt.

Im Bereich der in der Zeichnung nicht erkennbaren kapazitiven Schaltelemente der Leiterplatte 72 weist die Gehäuse-Vorderwandung 10 in ihren jeweils eines der Schaltelemente überdeckenden Bereichen lichtdurchlässige Leuchtsymbole 78 auf. Zur manuellen Betätigung der Schaltelemente braucht ein Bediener lediglich mit seinem Finger die Vorderwandung 10 im Bereich eines der Leuchtsymbole 78 leicht zu berühren. Im Bereich der Leuchtsymbole 78 weist die Leiterplatte 72 zusätzlich zu den Schaltelementen zugehörige Leuchtmittel auf. Vorzugsweise sind als Leuchtmittel jedem Leuchtsymbol 78 zwei benachbarte Leuchtdioden zugeordnet (in der Zeichnung nicht dargestellt), wodurch eine verbesserte Flächenausleuchtung der Leuchtsymbole 78 erreicht wird.

In einer weiteren besonderen Ausgestaltung weist das Stationsgerät 1 benutzerseitig aktivierbare oder deaktivierbare Mittel für eine automatische Annahme eines von einem anderen Stationsgerät innerhalb der Hauskommunikationsanlage eingehenden Rufes durch automatisches Aufbauen einer Audio-Verbindung als Reaktion auf den eingehenden Ruf auf. Dies bedeutet, dass in einem aktivierten Zustand der Mittel zur automatischen Rufannahme bei einem eingehenden Ruf die Audio-Verbindung selbsttätig hergestellt wird, ohne dass zum Verbindungsaufbau ein Bedienelement betätigt werden müsste. In einem Auslieferzustand des Stationsgerätes 1 ist diese Funktion für den Benutzer nicht zugänglich, indem ein entsprechender Menüpunkt in einem auf dem Display dargestellten Benutzermenü nicht erscheint. Eine Freischaltung der Funktion erfolgt durch einen Installateur bei der Inbetriebnahme der Hauskommunikationsanlage auf Kundenwunsch. Erst nach dieser FreischaJtung erscheint im Benutzermenü der Punkt "Automatische Rufannahme". Diese Funktion kann dann von dem Benutzer im Menü entsprechend aktiviert oder deaktiviert werden. In Kombination mit dieser Funktion ist es vorteilhaft, den Tonruf abschalten zu können. Auch dies erfolgt über das Benutzermenü. Über die Anzeigeelemente 12 kann der jeweilige Betriebszustand optisch signalisiert werden, beispielsweise über das Leuchtsymbol 78 in Form einer durchgestrichenen Glocke. Wenn dieses Leuchtsymbol dauerleuchtet, ist die Rufabschaltung aktiviert (Tonruf aus), und die automatische Rufannahme ist deaktiviert. Bei dauerhaft ausgeschaltetem Leuchtsymbol sind beide Funktionen deaktiviert, d. h. keine automatische Rufannahme und normaler Tonruf. Durch ein Blinken des LED-Signals wird signalisiert, dass die automatische Rufannahme aktiv ist. Um auch eine Aussage über den Zustand der Rufabschaltung zu erhalten, kann vorgesehen sein, durch kurze Betätigung des zugehörigen Schaltelementes von dem blinkenden Zustand für eine bestimmte Zeit von beispielsweise zwei Sekunden in einen anderen Anzeigemodus umzuschalten. Wenn dann für diese kurze Zeit das Signal leuchtet, ist die Rufabschaltung aktiviert, und wenn das Signal nicht leuchtet, ist die Rufabschaltung nicht aktiv. Bei aktivierter automatischer Rufannahme wird nach vollständigem Ablauf des Tonrufs, d. h. bevorzugt mit einer Verzögerung von etwa zwei Sekunden, die Audioverbindung selbsttätig hergestellt.

Es sei noch bemerkt, dass die automatische Rufannahme vorzugsweise auf Internrufe beschränkt ist, d. h. auf Verbindungen zwischen Wohnungsstationen.

Die automatische Rufannahme gestattet im Rahmen einer Hauskommunikationsanlage einen Aufbau einer Sprechverbindung ohne Bedienung an der gerufenen Station, z. B. für Büros, Kinderzimmer (Babyfon-Funktion), Arztpraxen und dergleichen.

Wie oben bereits erwähnt wurde, kann optional über das Anschlussteil 62 eine Zusatz-Spannungsversorgung von insbesondere 24 Volt an das Gerät 1 angeschlossen werden. In diesem Fall steht unabhängig von der Versorgung über den Zweidraht-Bus stets genügend Leistung zur Verfügung.

In vorteilhafter Ausgestaltung kann dabei das Stationsgerät 1 Mittel für eine automatische (dynamische) Erkennung der angeschlossenen Zusatzversorgung aufweisen. Wenn diese Erkennungsmittel das Vorhandensein der Zusatz-Versorgungsspannung feststellen, können automatisch bestimmte Zusatzfunktionen der Station 1 freigegeben werden. Dies betrifft insbesondere die Aktivierung des Displays 8 unabhängig von dem Betriebszustand der anderen Stationen innerhalb der Anlage. Bei Versorgung der Stationen allein über den Bus wäre die Leistung begrenzt, so dass beispielsweise nicht alle Displays aller Stationen gleichzeitig in Betrieb sein könnten. Bei angeschlossener und automatisch erkannter Zusatzversorgung können auch beliebige Internrufe und sonstige Schaltfunktionen (beispielsweise Steuerung von Treppenhauslicht, Türöffner und dergleichen) freigegeben und dann über das Display menügeführt gesteuert werden. Außerdem können optional bestimmte Betriebszustände - zusätzlich zu den Anzeigeelementen 12 - auch auf dem Display insbesondere verbal angezeigt werden.

Die Erfindung ist nicht auf die dargestellten und beschriebenen Ausführungsbeispiele beschränkt, sondern umfasst auch alle im Sinne der Erfindung gleichwirkenden Ausführungen. Insbesondere ist die Erfindung nicht nur für Bus-Systeme, sondern auch für andere Verdrahtungssysteme geeignet, z. B. Mehrdrahtsysteme, wie so genannte 1+n-Anlagen, oder Ethernet-Systeme (TCP/IP) oder auch Funk-Anlagen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Stationsgerät (1) für eine Hauskommunikationsanlage, mit einem Gerätegehäuse (2) mit einem Montage-Basisteil (26) und einem Geräte-Funktionsteile enthaltenden Gehäuse-Vorderteil (28), wobei an dem Basisteil (26) ein Anschlussteil (62) mit Anschlussklemmen (66) für elektrische Anschlussleitungen gehaltert ist, und wobei das Anschlussteil (62) derart über federnde Anlagekontaktelemente (70) elektrisch mit den Funktionsteilen verbunden oder verbindbar ist, dass die Verbindungen zwischen den Anschlussklemmen (66) und den Funktionsteilen selbsttätig durch Anlagekontakt beim Verbinden von Vorderteil (28) und Basisteil (26) hergestellt werden,
**dadurch gekennzeichnet, dass** dasAnschlussteil(62)zwei Anschlüsse (66) für eine Zweidraht-Busleitung, zwei weitere Anschlüsse (66) für einen externen Etagen-Ruftaster sowie zwei zusätzliche Anschlüsse (66) für eine Zusatz-Spannungsversorgung aufweist, wobei Mittel zur selbsttätigen Erkennung der Zusatz-Spannungsversorgung und zur Freigabe von Zusatzfunktionen bei erkanntem Vorhandensein der Zusatz Spannungsversorgung vorgesehen sind.

2. Stationsgerät nach Anspruch 1,
**dadurch gekennzeichnet, dass** dieFunktionsteileeine elektrische, in dem Gehäuse-Vorderteil (28) gehalterte Leiterplatte (72) aufweisen, wobei die Anlagekontaktelemente (70) als Federstifte ausgebildet sind, die im Wesentlichen senkrecht zur Ebene der Leiterplatte (72) ausgerichtet sind.

3. Stationsgerät nach Anspruch 2,
**dadurch gekennzeichnet, dass** die Anlagekontaktelemente (70) Bestandteile des Anschlussteils (62) sind, während die Leiterplatte (72) Kontaktflächen (74) zum elektrischen Anlagekontakt der Anlagekontaktelemente (70) aufweist.

4. Stationsgerät nach einem der Ansprüche 1 bis 3,
**gekennzeichnet durch** eine Ausgestaltung als Wohnungsstation, für eine HausKommunikationsanlage, mit Audio-Komponenten mit einem Mikrofon (4) und einem Lautsprecher (6) für eine Audio-Kommunikation sowie mit Video-Komponenten mit einem Display (8) zur Darstellung eines Videobildes und/oder eines Benutzermenüs, wobei der Lautsprecher (6) innerhalb des Gehäuses (2) in einem zu einer vorderen Geräte-Sichtseite hin von dem Display (8) überdeckten Bereich angeordnet ist, wobei dem Lautsprecher (6) eine Schallkammer (18) mit mindestens einer seitlichen Gehäuse-Schallöffnung (20) zugeordnet ist.

5. Stationsgerät nach Anspruch 4,
**dadurch gekennzeichnet, dass** dem Lautsprecher (6) auf seiner von der Schallkammer (18) abgewandten Seite ein akustisches Rückvolumen zugeordnet ist, wobei das Rückvolumen zur Vermeidung eines akustischen Kurzschlusses von der Schallkammer (18) akustisch getrennt ist.

6. Stationsgerät nach einem der Ansprüche 1 bis 5,
**dadurch gekennzeichnet, dass** dasGehäuse-Vorderteil(28) haubenartig aus einer Vorderwandung (10) und vier Seitenwandungen (22) besteht und über Rastmittel (30) an dem plattenartigen Montage-Basisteil (26) befestigt oder befestigbar ist.

7. Stationsgerät nach Anspruch 6,
**dadurch gekennzeichnet, dass** das Vorderteil (28) ein rahmenartiges, wesentliche Funktionsteile tragendes Trägerteil (32) aufnimmt, wobei das Trägerteil (32) auch den Lautsprecher (6) trägt und die Schallkammer (18) mit seitlichen Schallkanälen (24) aufweist.

8. Stationsgerät nach Anspruch 6 oder 7,
**dadurch gekenntzeichnet, dass** zwischendemBasisteil(26) und dem Trägerteil (32) ein plattenartiges Abdeckteil (40) angeordnet ist, wobei das Abdeckteil (40) im Bereich des Lautsprechers (6) zur Bildung des akustischen Rückvolumens ausgestaltet ist.

9. Stationsgerät nach Anspruch 8,
**dadurch gekennzeichnet, dass** das Abdeckten (40) einen Aufnahmeraum (42) für den rückwärtigen Bereich des Lautsprechers (6) aufweist, wobei der Aufnahmeraum (42) von der Schallkammer (18) akustisch entkoppelt ist.

10. Stationsgerät nach einem der Ansprüche 4 bis 9,
**dadurch gekennzeichnet, dass** das Mikrofon (4) über elektrische Anschlüsse (58) an einer Leiterplatte (36) angeschlossen ist, wobei die Anschlüsse (58) von federnden Anlagekontaktelementen gebildet sind, die elektrisch leitend auf zueinander konzentrischen Kontaktflächen (60) der Leiterplatte (36) aufliegen.

11. Stationsgerät nach einem der Ansprüche 1 bis 10,
**dadurch gekennzeichnet, dass** innerhalb des Gerätegehäuses (2) direkt unterhalb einer Vorderwandung (10) des Gehäuse-Vorderteils (28) auf einer Leiterplatte (72) kapazitive Schaltelemente angeordnet sind, wobei die Vorderwandung (10) in ihren jeweils eines der Schaltelemente überdeckenden Bereichen lichtdurchlässige Leuchtsymbole (78) und die Leiterplatte (72) zugehörige Leuchtmittel aufweisen.

12. Stationsgerät nach Anspruch 11, **dadurch gekennzeichnet, dass** als Leuchtmittel jedem Leuchtsymbol (78) zwei benachbarte Leuchtdioden zugeordnet sind.

13. Stationsgerät nach einem der Ansprüche 1 bis 12,
**gekennzeichnet durch** benutzerseitig aktivierbare oder deaktivierbare Mittel für eine automatische Annahme eines von einem anderen Stationsgerät innerhalb einer Hauskommunikationsanlage eingehendes Rufes durch automatisches Aufbauen einer Audio-Verbindung als Reaktion auf den eingehenden Ruf.

## Claims

1. Station device (1) for a building communication system, having a device housing (2) having an assembly base part (26) and a housing front part (28) containing device functional parts, wherein the base part (26) retains a connection part (62) having connection terminals (66) for electrical connecting lines, and wherein the connection part (62) is or can be electrically connected to the functional parts by means of resilient system contact elements (70) such that the connections between the connection terminals (66) and the functional parts are produced automatically through system contact when the front part (28) and the base part (26) are connected, **characterized in that** the connection part (62) has two connections (66) for a two-wire bus line, two further connections (66) for an external floor call button and two additional connections (66) for an additional power supply, wherein means for automatically recognizing the additional power supply and for enabling additional functions when the presence of the additional power supply is recognized are provided.

2. Station device according to Claim 1, **characterized in that** the functional parts have an electrical printed circuit board (72) retained in the housing front part (28), wherein the system contact elements (70) are in the form of spring pins that are oriented essentially at right angles to the plane of the printed circuit board (72).

3. Station device according to Claim 2, **characterized in that** the system contact elements (70) are parts of the connection part (62), whereas the printed circuit board (72) has contact areas (74) for the electrical system contact of the system contact elements (70).

4. Station device according to one of Claims 1 to 3, **characterized by** an embodiment as a residence station for a building communication system, having audio components having a microphone (4) and a loudspeaker (6) for audio communication and also having video components having a display (8) for presenting a video image and/or a user menu, wherein the loudspeaker (6) is arranged within the housing (2) in a region that is covered by the display (8) from a front device viewing side, the loudspeaker (6) having an associated sound chamber (18) having at least one lateral housing sound opening (20).

5. Station device according to Claim 4, **characterized in that** the loudspeaker (6) has an associated acoustic rear volume on its side facing away from the sound chamber (18), the rear volume being acoustically isolated from the sound chamber (18) in order to avoid an acoustic short circuit.

6. Station device according to one of Claims 1 to 5, **characterized in that** the housing front part (28) consists of a front wall (10) and four side walls (22) in the manner of a cowl and is or can be mounted on the plate-like assembly base part (26) via latching means (30).

7. Station device according to Claim 6, **characterized in that** the front part (28) holds a frame-like carrier part (32) carrying essential functional parts, the carrier part (32) also carrying the loudspeaker (6) and having the sound chamber (18) having lateral sound channels (24).

8. Station device according to Claim 6 or 7, **characterized in that** a plate-like cover part (40) is arranged between the base part (26) and the carrier part (32), the cover part (40) being designed to form the acoustic rear volume in the region of the loudspeaker (6).

9. Station device according to Claim 8, **characterized in that** the cover part (40) has a holding space (42) for the rear region of the loudspeaker (6), the holding space (42) being acoustically decoupled from the sound chamber (18).

10. Station device according to one of Claims 4 to 9, **characterized in that** the microphone (4) is connected to a printed circuit board (36) via electrical connections (58), the connections (58) being formed by resilient system contact elements that are supported in an electrically conductive manner on contact areas (60) of the printed circuit board (36) that are concentric with respect to one another.

11. Station device according to one of Claims 1 to 10, **characterized in that** capacitive switching elements are arranged within the device housing (2) directly below a front wall (10) of the housing front part (28) on a printed circuit board (72), the front wall (10) having translucent luminous symbols (78) in its regions that each cover one of the switching elements, and the printed circuit board (72) having associated illuminants.

12. Station device according to Claim 11, **characterized in that** each luminous symbol (78) has two associated adjacent light-emitting diodes as illuminants.

13. Station device according to one of Claims 1 to 12, **characterized by** user-activatable or -deactivatable means for automatically taking a call arriving from another station device within a building communication system by automatically setting up an audio connection as a reaction to the incoming call.

## Revendications

1. Appareil formant station (1) pour une installation de communication domestique, comprenant un boîtier d'appareil (2) pourvu d'une partie de base de montage (26) et d'une partie avant de boîtier (28) contenant des parties fonctionnelles d'appareil, une partie de raccordement (62) munie de bornes de raccordement (66) pour des lignes de raccordement électriques étant maintenue sur la partie de base (26), et la partie de raccordement (62) étant reliée ou pouvant être reliée électriquement avec les parties fonctionnelles par le biais d'éléments de contact par application à ressort (70) de telle sorte que les liaisons entre les bornes de raccordement (66) et les parties fonctionnelles sont établies automatiquement par contact par application lors de la liaison de la partie avant (28) et de la partie de base (26), **caractérisé en ce que** la partie de raccordement (62) possède deux bornes (66) pour une ligne de bus bifilaire, deux bornes (66) supplémentaires pour une touche d'appel des étages externe ainsi que deux bornes (66) supplémentaires pour une alimentation électrique additionnelle, des moyens étant prévus pour la reconnaissance automatique de l'alimentation électrique additionnelle et la libération de fonctions supplémentaires lors de la présente détectée de l'alimentation électrique additionnelle.

2. Appareil formant station selon la revendication 1, **caractérisé en ce que** les parties fonctionnelles possèdent un circuit imprimé (72) électrique maintenu dans la partie avant de boîtier (28), les éléments de contact par application (70) étant réalisées sous la forme de broches à ressort qui sont orientées sensiblement perpendiculairement au plan du circuit imprimé (72).

3. Appareil formant station selon la revendication 2, **caractérisé en ce que** les éléments de contact par application (70) sont des éléments structuraux de la partie de raccordement (62), alors que le circuit imprimé (72) possède des surfaces de contact (74) destiné à réaliser un contact électrique par application avec les éléments de contact par application (70).

4. Appareil formant station selon l'une des revendications 1 à 3, **caractérisé par** une configuration en tant que station d'appartement pour une installation de communication domestique, comprenant des composants audio avec un microphone (4) et un haut-parleur (6) pour une communication audio ainsi que des composants vidéo avec un afficheur (8) destiné à la représentation d'une image vidéo et/ou d'un menu d'utilisateur, le haut-parleur (6) étant disposé à l'intérieur du boîtier (2) dans une zone recouverte par l'afficheur (8) dans la direction d'une face frontale de l'appareil, une chambre acoustique (18) munie d'au moins une ouverture acoustique (20) latérale de boîtier étant associée au haut-parleur (6).

5. Appareil formant station selon la revendication 4, **caractérisé en ce qu'**un volume arrière acoustique est associé au haut-parleur (6) sur son côté se trouvant à l'opposé de la chambre acoustique (18), le volume arrière étant isolé acoustiquement de la chambre acoustique (18) afin d'éviter un court-circuit acoustique.

6. Appareil formant station selon l'une des revendications 1 à 5, **caractérisé en ce que** la partie avant de boîtier (28) est constituée à la manière d'un capot d'une paroi avant (10) et de quatre parois latérales (22) et elle est fixée ou peut être fixée à la partie de base de montage (26) par le biais de moyens d'encliquetage (30).

7. Appareil formant station selon la revendication 6, **caractérisé en ce que** la partie avant (28) accueille une partie porteuse (32) de type cadre supportant les principales parties fonctionnelles, la partie porteuse (32) supportant également le haut-parleur (6) et présentant la chambre acoustique (18) avec des canaux acoustiques latéraux (24).

8. Appareil formant station selon la revendication 6 ou 7, **caractérisé en ce qu'**une partie de recouvrement (40) de type plaque est disposée entre la partie de base (26) et la partie porteuse (32), la partie de recouvrement (40) dans la zone du haut-parleur (6) étant configurée pour former le volume arrière acoustique.

9. Appareil formant station selon la revendication 8, **caractérisé en ce que** la partie de recouvrement (40) possède un espace d'accueil (42) pour la zone arrière du haut-parleur (6), l'espace d'accueil (42) étant découplé acoustiquement de la chambre acoustique (18).

10. Appareil formant station selon l'une des revendications 4 à 9, **caractérisé en ce que** le microphone (4) est raccordé à un circuit imprimé (36) par le biais de bornes électriques (58), les bornes (58) étant constituées d'éléments de contact par application à ressort qui reposent de manière électriquement conductrice sur des surfaces de contact (60) mutuellement concentriques du circuit imprimé (36).

11. Appareil formant station selon l'une des revendications 1 à 10, **caractérisé en ce que** des éléments de commutation capacitifs sont disposés à l'intérieur du boîtier d'appareil (2), directement au-dessous d'une paroi avant (10) de la partie avant de boîtier (28), la paroi avant (10) possédant, dans ses zones recouvrant respectivement l'un des éléments de commutation, des symboles lumineux (78) laissant passer la lumière et le circuit (72) imprimé possédant des moyens lumineux associés.

12. Appareil formant station selon la revendication 11, **caractérisé en ce que** les moyens lumineux sont deux diodes électroluminescentes voisines associées à chaque symbole lumineux (78).

13. Appareil formant station selon l'une des revendications 1 à 12, **caractérisé par** des moyens pouvant être activés ou désactivés du côté de l'utilisateur pour une acceptation automatique d'un appel entrant en provenance d'un autre appareil formant station à l'intérieur d'une installation de communication domestique par établissement automatique dune liaison audio en réaction à l'appel entrant.
